# EUROPÄISCHE PATENTSCHRIFT

(11) **EP 2 707 426 B1**
(45) Veröffentlichungstag und Bekanntmachung des Hinweises auf die Patenterteilung: **30.12.2015**
(21) Anmeldenummer: 12732955.5
(22) Anmeldetag: 11.05.2012
(51) Int. Cl.: C08K 7/16, H01B 1/22

(54) **LEITFÄHIGES POLYMERMATERIAL, DESSEN VERWENDUNG UND VERFAHREN ZU SEINER HERSTELLUNG**
CONDUCTIVE POLYMER MATERIAL, USE OF SAME, AND A METHOD FOR THE PRODUCTION OF SAME
MATÉRIAU POLYMÈRE CONDUCTEUR, SON UTILISATION ET SON PROCÉDÉ DE PRODUCTION

(30) Priorität: 12.05.2011 DE 102011101579
(43) Veröffentlichungstag der Anmeldung: 19.03.2014
(73) Patentinhaber: Otto Bock HealthCare GmbH, 37115 Duderstadt (DE)
(72) Erfinder: ANHALT, Klaus-Peter, 37434 Rhumspringe (DE); REINHARDT, Holger, 37906 Kempen (DE)
(74) Vertreter: Lins, Martina
(86) Internationale Anmeldenummer: PCT/DE2012/000517
(87) Internationale Veröffentlichungsnummer: WO 2012/152262

(56) Entgegenhaltungen:
- DE-A1- 1 665 098
- DE-A1- 3 008 264
- DE-A1- 4 415 802
- DE-A1-102008 050 932
- US-A- 5 137 959
- US-A1- 2004 106 718
- DATABASE WPI Week 197748 Thomson Scientific, London, GB; AN 1977-85409Y XP002682570, -& JP 52 124197 A (INOUE JAPAX RES INC) 18. Oktober 1977 (1977-10-18)
- Dr. Gerhard Pfaff (Merck KGaA, Forschung Pigmente): "Funktionelle anorganische Pigmente", Grundlagen Technik Pigmente Phänomen Farbe , Juli 2003 (2003-07), XP002682549, Gefunden im Internet: URL:http://www.colour-europe.de/pf_812_pig mente_pfaff02-1.htm [gefunden am 2012-08-30]

## Beschreibung

Die Erfindung betrifft eine Hautauflage, enthaltend ein leitfähiges Polymermaterial aus einem Basispolymer und darin verteilten leitfähigen Feststoffpartikeln, die Verwendung der Hautauflage, insbesondere im medizinischen und orthopädietechnischen Bereich, und ein Verfahren zur Herstellung des leitfähigen Polymermaterials der Hautauflage.

Elektrisch leitfähige Polymere werden auf den verschiedensten Gebieten der Technik benötigt. Unter anderem werden im medizinischen und orthopädietechnischen Bereich gerne leltfählge Polymere anstelle starrer metallischer Leiter verwendet, wenn vom Körper eines Patienten Potentiale abgeleitet oder an bestimmten Körperbereiche elektrisch Potentiale angelegt werden sollen. Dies geschieht dort vor allem zu Gunsten eines besseren Tragekomforts, d.h. um den direkten Kontakt mit metallischen Leitern am menschlichen Körper zu vermeiden. Häufig wird gleichzeitig angestrebt, dass der Kunststoff Potentialspitzen ausgleicht und Spannungswerte über einen gewissen lokalen Bereich gleichsam mittelt.

Ein großer Anwendungsbereich für leitfähige Polymere sind daher für einen unmittelbaren Körperkontakt ausgelegte medizinische Elektroden für die Signalerfassung, die Signalgebung und die Stimulation einschließlich von Sensoren. Darüber hinaus können diese Materialien z. B. für flexible Leiterbahnen und andere elektrische Komponenten verwendet werden.

Herkömmliche Elektroden für den klinischen Alltag, wie in der DE 10 2009 013 470 A1 offenbart, basieren häufig auf Ag/AgCl-Elektroden und benötigen elektrolytische Gele oder Pasten zwischen dem Sensor und der Haut, um die Übergangsimpedanz herabzusetzen. Die Gele trocknen mit der Zeit aus, was eine dramatische Abnahme der Signalqualität bedeutet. Viele Personen sind empfindlich oder sogar allergisch gegen die verwendeten Gelsubstanzen, so dass es auch aus diesem Grund diese Gele zu vermeiden gilt.

Die DE 10 2008 050 932 A1 beschreibt ein leitfähiges Flüssigelastomer aus einem Kautschuk, einem Hydrosiloxan-Vernetzer, einem HydrosilylierungsKatalysatorsystem und ggf. einem Peroxid, wobei die Leitfähigkeit des Flüssigelastomers durch einen leitfähigen Füllstoff erzielt wird, beispielsweise gebildet aus silberbeschichteten Kupferflakes und leitfähigem Ruß. Das Flüssigelastomer lässt sich durch Drucktechniken verarbeiten. Die Leitfähigkeit bleibt unter gewisser Dehnung erhalten. Eine Verwendungsmöglichkeit sind auf Textil gedruckte Leiterbahnen für die Signalübertragung.

Die US 2004/106718 A offenbart eine lichthärtbare silberhaltige Zusammensetzung, die Acrylpolymer-Ausgangsverbindungen, Silberpulver und Silberflakes enthält und nach der Härtung eine Silberbeschichtung ergibt.

Aus der JP 5212 4197 (Abstract) ist ein druckempfindliches Widerstandselement bekannt, das in einem Basispolymer nadelförmige oder dendritische elektrisch leitfähige Partikel enthält.

Es sind auch leitfähige Textilien bekannt, bei denen teils auch Polymere, nämlich elastische Synthetikgarne mitverwendet werden. Die DE 10 2005 041 297 A1 offenbart ein elektrisch leitendes, elastisch dehnbares Hybridgarn mit einem elastischen Kern und einem elektrisch leitenden Carbonfasermantel. Ein hieraus erhaltenes Textil ist für Abschirmzwecke und Flächenheizelemente vorgesehen. Für medizinische Anwendungen sind derartige Textilien zu inhomogen und wenig reproduzierbar hinsichtlich der elektrischen Leitfähigkeit. Dieses Textil hat außerdem einen relativ schlechten, nur punktförmigen Kontakt zur Haut.

Der Erfindung liegt die Aufgabe zugrunde, ein leitfähiges Polymermaterial - insbesondere für medizinische, sportmedizinische und orthopädietechnische Elektroden und Sensoren - zur Verfügung zu stellen, welches unproblematisch herstellbar ist, beim Biegen oder Dehnen leitfähig bleibt, nicht schwarz und daher einfärbbar ist, unter Anwendungsbedingungen beim Tragen am Körper auch im feuchten Milieu stabil bleibt und pflegeleicht ist. Die mechanischen Eigenschaften des Basispolymers sollen dabei möglichst unbeeinflusst erhalten bleiben. Auch soll das leitfähige Polymer so anpassungsfähig bzw. anschmiegsam sein, dass ein hoher Tragekomfort gewährleistet wird.

Die Aufgabe wird mit der Hautauflage mit dem leitfähigen Polymermaterial nach Anspruch 1 gelöst. Die Hautauflage enthält das leitfähige Polymermaterial beispielsweise in Kombination mit einer unterliegenden permeablen oder semi-permablen Membran oder einem Vlies, oder die Hautauflage liegt allgemein in Form einer Folie, eines Pads oder eines Kissens vor, integriert in ein medizinisches Gerät, (beispielsweise für Diagnose, Monitoring oder Therapie), einen orthopädischen Stützapparat oder dergleichen.

Das leitfähige Polymermaterial besteht aus einem selbst nicht oder nicht wesentlich leitfähigem Basispolymer, das gegebenenfalls mit Additiven und Zuschlagstoffen versehen sein kann, und darin fein verteilten leitfähigen Feststoffpartikeln, die in dem Volumen des leitfähigen Polymermaterials im Wesentlichen homogen dispergiert sind. Hierdurch entsteht ein in sich homogenes leitfähiges Polymermaterial, das unter anderem für Elektroden und Sensoren verwendet werden kann.

Bei dem Basispolymer kann es sich um ein Homo- oder Copolymer oder eine Mischung von Polymeren handeln. Der Begriff "Polymer" ist in einem technischen Sinn zu verstehen; u. a. Polykondensate werden daher ebenfalls zu den Polymeren gerechnet.

Die Leitfähigkeit des Polymermaterials der erfindungsgemäßen Hautauflage wird durch in das Polymer eingebettete leitfähige Feststoffpartikel bewirkt, wie dies als solches bekannt ist. Die Leitfähigkeit ist dabel derart, dass sie sich als Eigenschaft auf das gesamte Material bzw. Volumen erstreckt und über eine reine Oberflächen-leitfähigkeit oder antistatische Ausrüstung hinausgeht. Im Sinne der Erfindung heißt "leitfähig", mit einem spezifischen Widerstand (ρ_{D.S}) von vorzugsweise nicht mehr als 1000 kΩ cm, weiter vorzugsweise nicht mehr als 100 kΩ ·cm.

Für in begrenztem Maße leitfähige oder antistatische Polymere wird häufig Ruß als Leitfähigkelts-Additiv verwendet. Die erhaltenen Materialien sind schwarz, können nicht eingefärbt werden und sind daher für medizinische Anwendungen relativ unattraktiv. Leitfähigkeitsruß besteht aus Nanopartikeln, die sich in Polymerschmelzen oder viskose Polymerlösungen sehr schlecht einarbeiten lassen. Die Viskosität der Mischung stiege bei Einarbeiten der für die gewünschte Leitfähigkeit erforderlichen Leitrußmenge so stark an, dass die Verarbeitung des Polymermaterials extrem erschwert, wenn nicht unmöglich gemacht würde. Ferner ist Ruß in Kontakt zur Haut aus gesundheitlichen Gründen, u.a. wegen unvermeidlicher PAK-Gehalte, zu vermeiden.

In dem Basispolymer sind erfindungsgemäß plättchenförmige leitfähige Teilchen eingebettet und über sein Volumen verteilt.

Dabei handelt es sich um Teilchen im Mikrometermaßstab (bezüglich wenigstens einer Raumrichtung) und nicht um Nanoteilchen. Dies bewirkt eine wesentlich verbesserte Verarbeitbarkeit der Mischung zu den elastischen und/oder biegsamen Polymeren nach dieser Erfindung.

Die Menge der leitfähigen Teilchen wird so eingestellt, dass sich die gewünschte Leitfähigkeit ergibt. Füllgehalte bis 35 Vol-% vorzugsweise bis 30 Vol.-%, weiter vorzugsweise bis 18 Vol.-% Maximalgehalt an leitfähigen Teilchen sind realisierbar, ohne dass das Material zu sehr verspröden würde.

Als plättchenförmige leitfähige Teilchen können leitfähige plättchenförmige Pigmente, insbesondere beschichtete Glimmerpigmente eingesetzt werden. Solche Pigmente sind z. B. als Effektfarben mit gleichzeitigem antistatischen Effekt bekannt. Sie werden für Lacke und andere Oberflächenbeschichtungen eingesetzt. Als Trägermaterialien für diese Gruppe leitfähiger Partikel werden unter anderem Schichtsilikate, insbesondere Glimmer und weitere plättchenförmig ausgebildete Nichtmetalloxide, wie Siliziumdioxid, Titandioxid oder auch Bariumsulfat, verwendet. Allgemein wird der Plättchengrundkörper aus einem anorganisch-oxidischen Trägermaterial oder aus Metall gebildet. Diese Trägermaterialien sind mit einer leitfähigen Schicht überzogen, die aus dotierten Metalloxiden, wie beispielsweise Antimon-dotiertem Zinkoxid gebildet sein können. Ein Beispiel für ein mit Antimon-dotiertem Zinnoxid leitfähig gemachtes Glimmerpigment wird in EP 0 139 557 beschrieben, auf die hiermit Bezug genommen wird. Die Plättchengrundkörper können alter-nativ auch metallisch beschichtet, z.B. bedampft, sein.

Unter "plättchenförmigen Teilchen" werden generell solche verstanden, deren Höhe im Wesentlichen gleichförmig und deutlich geringer als deren Breite und/oder Länge ist. Typischerweise können für die Erfindung geeignete plättchenförmige Partikel eine Länge entlang der Hauptachse von 1 bis ca. 60 µm. vorzugsweise ca. zwischen 5 und 30 µm, besitzen. Die Höhe beträgt demgegenüber vorzugsweise zwischen 100 nm und 1 µm, bevorzugt um 500 nm. Außerdem ist es bevorzugt, dass das Verhältnis der Hauptachse zu wenigstens einer der orthogonalen Nebenachsen der plättchenförmigen, dendritischen oder anderen länglichen leitfähigen Teilchen zwischen 1,5:1 und 10:1 liegt.

Ein Basispolymer, das mit plättchenförmigen leitfähigen Teilchen vermischt wird, besitzt allgemein eine höhere Grundleitfähigkeit, als ein mit dem gleichen Gewichtsanteil entsprechender, kugelförmiger leitfähiger Teilchen gefülltes Basispolymer. Dies bedeutet, dass die Perkolationsschwelle durch die flache und vorzugsweise langgestreckte Form erniedrigt wird. Durch die Erfindung wird es möglich, leitfähige, biegefähige und elastische Polymere herzustellen, die ihre Biegefähigkeit und kautschukartige Elastizität mehr oder weniger nicht verlieren, während dieselben Basispolymere bei Füllung mit pulver bzw. kugelförmigen Leitfähigkeitsteilchen bei entsprechen-den Leitfähigkeitswerten, soweit überhaupt mit kugelförmigen Teilchen eine Leitfähigkeit zu erzielen wäre, von stark verminderter Biege- und/oder Dehnungsfähigkeit, schlechten Reißdehnungswerten und hoher Weiterreißneigung betroffen wären. Kugelförmige bzw. pulverförmige Teilchen (ggf. auch nanoskalig) müssten in so hohem Gewichtsanteil eingebracht werden, um eine ausreichende Leitfähigkeit zu erzielen, dass die Dichte des Werkstoffs beträchtlich zunähme - ein Nachteil für den sonst vorzugsweise leichten Polymerwerkstoff.

Überraschenderweise behält ein leitfähiges Polymer, welches plättchenförmige leitfähige Teilchen enthält, seine Leitfähigkeit auch beim Biegen, Dehnen, Stauchen oder bei Torsionen grundsätzlich bei, während dies bei kugelförmigen leitfähigen Teilchen nicht der Fall wäre.

Mit den plättchenförmigen leitfähigen Teilchen können daher biegsame, anschmiegsame, elastische und gleichzeitig leitfähige Polymere für medizinische und orthopädische Anwendungen hergestellt werden, die zugleich leitfähig und mechanisch beanspruchbar, insbesondere biegefähig bleiben. Wichtig ist auch, dass durch geeignete Konzentrationseinstellungen erreicht werden kann, dass die Leitfähigkeit auch bei mechanischer Belastung, wie Biegen, Dehnen oder Verdrehen grundsätzlich erhalten bleibt. Die graduelle Änderung der Leitfähigkeit beim Biegen oder Dehnen kann für sensorische Anwendungen genutzt werden.

Die Konzentration an leitfähigen Teilchen beträgt in Volumen% bezogen auf das leitfähige Polymer insgesamt
- bei Silikonelastomeren (Silikonkautschuken), einschließlich von LSR (Liquid silicone rubber) und einschließlich von HTV- und RTV-Silikonelastomersystemen vorzugsweise zwischen 10% und 25%, vorzugsweise zwischen 15 und 22 %;
- bei thermoplastischen Elastomeren, wie z.B. TPU (thermoplastische Polyurethane) vorzugsweise zwischen 5% und 30%, vorzugsweise zwischen 7 und 25 %;
- bei elastomeren Polyurethanen und Polyurethangelen vorzugsweise zwischen 5% und 30%, vorzugsweise zwischen 10 und 25 %.

Die Teilchen, die als Feststoff lichtbrechend-farblos bis grau/anthrazit sein können, färben das Basispolymer nicht schwarz, so dass ein nicht schwarzes leitfähiges Polymermaterial erhalten wird, welches zusätzlich beliebig eingefärbt werden kann.

Das Basispolymer ist in diesem leitfähigen Polymermaterial erfindungsgemäß ein Elastomer, und zwar ein biegsames und/oder dehnfähiges Elastomer mit einer messbaren reversiblen Längendehnfähigkeit. Vorzugsweise beträgt die Dehnfähigkeit des Basispolymers bis zum Bruch (Bruchdehnung, DIN53504) wenigstens 150 %. Dabei soll erfindungsgemäß bis zu einer (Längs-)Dehnung von wenigstens 25 % eine Leitfähigkeit erhalten bleiben, in den besonders bevorzugten Ausführungsformen bis zu einer Dehnung von 100 %. Das Elastomer kann ein thermoplastisches Elastomer sein. Die leitfähigen Feststoffpartikel sollten in dem Basispolymer homogen verteilt bzw. dispergiert sein und nicht auf bestimmte Volumenbereiche eines Polymerkörpers, z.B. auch in Form von Schichten oder Clustern, beschränkt sein. Dies betrifft insbesondere die Anwendung als Elektroden oder Sensormaterial und ist dort erforderlich, um reproduzierbare Messwerte zu gewährleisten.

Bevorzugte Basispolymere sind Silikone, elastische Polyurethane, thermoplastische Polyurethane, Polyurethangele, Latex, Gummis oder Synthesekautschuke.

Die bevorzugten Silikone umfassen Silikonkautschuke bzw. Silikonelastomere, einschließlich von LSR (Liquid Silicone Rubber) als Ein- oder Zweikomponentenmaterial, sowohl als HTV (hochtemperaturvernetzend) als auch als RTV (raumtemperaturvernetzend) Silikone. Für die Definition von Silikonen und die Darstellung der typischen Eigenschaften wird Bezug genommen auf Ullmann's Encyclopedia of Industrial Chemistry, 5th Ed., VCH 1993, Vol. A24, Silicones, Seit 57-81.

Die bevorzugten Polyurethane umfassen elastische Polyurethane (Polyurethanelastomere), thermoplastische Polyurethane und Polyurethangele. Für die Definition von Polyurethanen und die Darstellung der typischen Eigenschaften wird Bezug genommen auf Ullmann's Encyclopedia of Industrial Chemistry, 5th Ed. VCH 1992, Vol. A21, Polyurethanes, Seiten 665 - 711, und für thermplastische Polyurethane (TPU) insbesondere auf Seite 702 - 703, sowie auf "Oertel, G., Polyurethane - Kunststoffhandbuch", 3. Auflage, Hanser-Verlag, München, 1993, Kapitel 8.2, Seite 455 - 467.

Für die bevorzugten Polyurethangele wird Bezug genommen auf EP 57838 und EP 511570, aus denen der Fachmann geeignete Polyurethangele entnehmen kann.

In Weiterbildung der Erfindung ist vorgesehen, dass das Basispolymer zusätzlich zu den plättchenförmigen leitfähigen Teilchen weitere leitfähige Feststoff-partikel enthält, und zwar kugelförmige leitfähige Teilchen. Unter "kugelförmigen" Teilchen werden hier auch solche verstanden, die eine Irreguläre, Jedoch im Wesentlichen sphärische Gestalt haben, ohne "langgestreckt" zu sein. Die kugelförmigen Teilchen sollten vorzugsweise eine im Wesentlichen glatte Oberfläche besitzen, was sich beispielsweise in einer guten Rieselfähigkeit dieser Feststoffteilchen zeigen kann. Zu den kugelförmigen Teilchen gehören demnach auch Teilchen mit nicht exakt kugelförmiger, sphäroider Form. Zu den kugelförmigen Teilchen zählen auch Hohlkugeln. Als kugelförmige leitfähige Teilchen sind Metallteilchen geeignet, vorzugsweise werden jedoch leitfähig beschichtete anorganische Füllstoffe, in erster Linie sogenannte "weiße" Füllstoffe, verwendet. Wiederum können als Trägermaterialien vorteilhaft Siliziumdioxid, Titandioxid oder Bariumsulfat verwendet werden. Andere mineralische Oxide und Hydroxide, wie unter anderem Aluminiumoxid oder -hydroxid sind ebenfalls geeignet. Für die Erfindung geeignete Teilchen sind beispielsweise aus der EP 0 359 569 bekannt, auf die hiermit Bezug genommen wird. Diese beschreibt Hohlkugeln aus Siliziumdioxid, die mit Antimon-dotiertem Zinnoxid beschichtet sind.

Die kugelförmigen leitfähigen Teilchen besitzen vorzugsweise einen Durchmesser zwischen 500 nm und 25 µm und weiter vorzugsweise zwischen 1 µm und 5 µm.

Das Volumenverhältnis der kugelförmigen leitfähigen Teilchen zu den plättchenförmigen leitfähigen Teilchen liegt vorzugs-weise im Bereich von 10:90 und 90:10 und insbesondere im Bereich von 10:90 und 60:40.

Weitere Vorteile ergeben sich, wenn die leitfähigen Teilchen im Basispolymer ausgerichtet sind. d.h. Die Hauptachsen der Teilchen können daher über alle Richtungen summiert eine Vorzugsrichtung besitzen und die elektrische Leitfähigkeit des Materials kann insgesamt anisotrop sein. Überraschenderweise hat sich gezeigt, dass diese zusätzliche Ausrichtung der leitfähigen Partikel eine weitere Absenkung der Perkolationsschwelle ermöglicht, Dabei genügt es, wenn die Ausrichtung bewirkt, dass die leitfähigen Teilchen wenigstens teilweise in Bezug auf Nachbarteilchen ausgerichtet sind und ins-besondere teilweise zu Ketten aneinander gereiht sind. Eine lineare Ausrichtung der Ketten oder eine Kettenvorzugsrichtung ist nicht erforderlich. Werden für bestimmte Messzwecke Materialien mit deutlich anisotropen Eigenschaften gewünscht, kann dies durch geeignete Maßnahmen, wie sie weiter unten noch beschrieben werden, herbeigeführt werden.

Nach einem zusätzlichen Aspekt der Erfindung kann das leitfähige Polymermaterial zusätzlich ein intrinsisch leitfähiges Polymer enthalten, wobei ein Anteil bis zu 30 Gew.-%, vorzugsweise bis zu 15 Gew.-% bevorzugt ist. Das intrinsisch leitfähige Polymer wird nur in untergeordneter Menge zugesetzt, da diese Materialien steif oder spröde sein können und für die hier angestrebten Anwendungszwecke als Basispolymere nicht geeignet sind. Die intrinsisch leitfähigen Polymere können jedoch dazu dienen, die Leitfähigkeit pro Gewichtsteil an leitfähigen Feststoffpartikeln herabzusetzen, so dass der Anteil an festen Füllstoffen weiter gesenkt werden kann, sofern dies gewünscht Ist. Als Intrinsisch leitfähige Polymere sind beispielsweise Polyaniline, Polyacetylene, Polythiophen, Polypyrrol, Polyphenylen und Poly(phenylvinyliden) geeignet.

Das erfindungsgemäß leitfähige Polymermaterial kann in den unterschiedlichsten Anwendungsbereichen eingesetzt werden. Durch die hohe Flexibilität und Dehnbarkeit eines Elastomers besteht dabei die Möglichkeit, dünne Schichten des Materials herzustellen Die niedrige Wärmeleitfähigkeit des Polymermaterials bringt einen erhöhten Tragekomfort mit sich, vor allem im Vergleich zu metallischen Elektroden. Aufgrund dieser Eigenschaften ist erfindungsgemäß die Verwendung des leitfähigen Polymermaterials nach der Erfindung für Elektroden oder Sensoren insbesondere im medizinischen oder klinischen Bereich vorgesehen. Die Erfindung ermöglicht eine neue Verwendung des Materials in Elektroden für die Signalerfassung, Signalgebung und Stimulation, also Messelektroden, Stimulationselektroden, Sensoren, wie insbesondere Feuchtigkeits-sensoren oder Reizübertragungssensoren, allgemein Messfühlern und flexiblen Leiterbahnen. Das leitfähige Polymermaterial ist unter anderem für Trockenelektroden verwendbar, da auf Kontaktgele verzichtet werden kann. Es ist geeignet für FES- und TENS-Anwendungen. Im medizinischen Bereich können die Hautauflagen mit den leitfähigen Materialien nach dieser Erfindung im medizinischem und sanitärtechnischem Zubehör eingesetzt werden, beispielsweise in elastischen Bandagen, Linern, Sleeves, Orthesen, Prothesen, Polstermaterialien, Schäften und vielem mehr.

Die Erfindung umfasst auch ein besonderes Verfahren zur Herstellung eines leitfähigen Polymermaterials für die Hautauflage gemäß Anspruch 11. Wie bereits oben beschrieben, ermöglicht eine Ausrichtung der leitfähigen Teilchen in dem Basispolymer, dass mit einem relativ geringeren Gewichtsanteil an leitfähigen Feststoffteilchen die gleiche elektrische Leitfähigkeit wie mit einem höheren Anteil an nicht ausgerichteten Teilchen erzielt werden kann. Durch das erfindungsgemäße Verfahren werden daher allgemein elektrisch leitende Kunststoffe bzw. Polymere mit guter Leitfähigkeit und relativ geringem Anteil an leitfähigen Feststoffen bereitgestellt.

Das erfindungsgemäße Verfahren sieht dabei vor, dass ein Basispolymer während seiner Herstellung oder im aufgeschmolzenen oder gelösten Zustand mit den leitfähigen Teilchen versetzt wird und dass eine Ausrichtung der Teilchen in der noch nicht ausreagierten Polymermasse oder der gelösten oder geschmolzenen Polymermasse erfolgt und bei Erstarren des Polymers fixiert wird.

Das leitende Polymermaterial soll dabei die Feststoffpartikel über sein Volumen verteilt und dispergiert enthalten. Eine möglichst homogene Verteilung wird angestrebt.

Als Basispolymer ist jedes der oben bereits genannten Polymere oder Polymergemische geeignet. Zusätzlich sind hier auch thermoplastische Polymere und Duroplaste geeignet, die in der beschriebenen Weise leitfähig ausgerüstet werden können. Ein zusätzlich bevorzugtes Basispolymer, das mit dem erfindungsgemäßen Verfahren leitfähig gemacht werden kann, ist Acrylat oder Methacrylat bzw. Acrylharz. "Während seiner Herstellung" bedeutet, dass das Verfahren an reaktiven Massen, beispielsweise reagierenden Polykondensaten wie Polyurethanen durchgeführt werden kann. Alternativ können auspolymerisierte Polymere aufgeschmolzen oder gelöst und dann mit den leitfähigen Teilchen versetzt werden. Das Lösungsmittel wird, sofern vorhanden, anschließend in üblicher Weise entfernt, d. h. das Material wird aushärten gelassen.

Die Ausrichtung der Teilchen in der noch flüsslgen bzw. flüssig-viskosen Polymermasse kann durch jede mechanische oder physikalische Methode geschehen, mit der viskose Massen orientiert werden können. Bevorzugt kann dies ein Fließenlassen der Polymermasse sein, bei der sich die langgestreckten Teilchen in der viskos fließenden Masse ausrichten werden.
Das Ausrichten kann auch durch Raken erfolgen. Auch hier wird der Masse eine innere Strömung aufgezwungen, die die nicht kugelsymmetrischen Teilchen ausrichtet. Weitere Möglichkeiten, die Teilchen auszurichten ist durch Extrudieren oder sonstiges Pressen durch eine Düse gegeben. Auch die Verfahren zum Ziehen von Folien sind für die Ausrichtung der in der gezogenen Polymermasse enthaltenen nicht kugelförmigen Teilchen, nämlich den Teilchen der Gruppen a), b) und c), geeignet sind.

Im Folgenden wird die Erfindung anhand von Ausführungsbeispielen näher erläutert. Dabei werden Rezepturbeispiele angegeben, die das Verständnis der Erfindung erleichtern sollen, ohne dass hierdurch der Umfang der Offenbarung geschmälert würde. Der Fachmann kann entsprechende weitere Beispiele auffinden, indem die in der vorstehenden allgemeinen Beschreibung gemachten Angaben kombiniert werden.

Die Rezepturbeispiele werden durch REM-Aufnahmen, die als Abbildungen gezeigt sind, und Tests zur Leitfähigkeit der leitfähigen Polymermaterialien mit zugehörigen Tabellen ergänzt.

### BEISPIELTEIL

### Basismaterialien:

- Silikon (Rhodia SILBIONE®) RTV 4411; 617D35/D36); Mischungsverhältnis (A:B) 10:1
- thermoplastisches Polyurethan (TPU) (See-Plastik GmbH, SEETHAN® 2403K; Festkörpergehalt 17%; 617D44)
- Acrylharz (Orthocryl, Laminierharz 80:20 + 2% BPO Härter 617H19)

### Additive:

- leitfähige Pigmente, z. B. Merck Minatec® - 60 CM optional 40 CM, Glimmerplättchen mit Antimon dotiertem Zinndioxid leitend beschichtet, ggf. zusätzlich leitfähig beschichtete kugelförmige anorganische Fullstoffe (Milliken Zelec®S (Siliziumdioxidkern), Milliken Zelec®T (Titanoxidkern), mit Partikelgrößen im Bereich von 1 bis 5 µm), Merck Minatec® 60 CM, Merck Minatec® 40 CM, Merck Minatec® 31 CM, Merck Minatec® 51 CM
- dendritische Metallpartikel (Ag, Cu), Silberpartikel AMI DODUCO (1:GN1; 2:AGPE0160-6)

### Intrinsisches leitfähiges Polymer:

- Clevios FE
- ORMECON L 5000 / C9000
- Panipol W, Lsgm. Wasser (Polyanilin)

### Lösungsmittel:

- Tetrahydrofuran
- HMDS (Hexamethyldisiloxan), z. B. Dow Corning, 200 R Fluid, 0.65 cSt

### Rezepturbeispiele:

Es bedeuten:
m_{A}: Masse Additiv; mₚ: Masse Polymer; m_{PG} Masse Polymergemisch;
m_{PA}: Masse Komponente A (Polymer); m_{PB}: Masse Komponente B (Polymer);
m_{L}: Masse Lösungsmittel; m_{iP}; Masse intrinsisch leitfähiges Polymer

### 1. Rezeptur (Vergleichsbeispiel)

TPU mit dendritischen Silberpartikeln
Basismaterial: TPU (SEETHAN® 2403K; Festkörpergehalt 17 %)
Additiv: dendritische Silberpartikel (AMI DODUCO GN1 /AGPE0160-6)
   1. m_{PG} = 12,00 g (mp = 2,04 g) (30 m-%)
   2. m_{A} = 4,76 g (70 m-%)
   3. m_{PG} + m_{A} ; t = 2 min vermischen
   4. Probe evakuieren (Exsikkator): p = 400 mbar pulsierend; t = 30 s (durch pulsierendes ent- und belüften lassen sich feinste Bläschen evakuieren)
   5. Probe auftragen
   6. THF (Lsgm.) ausdiffundieren lassen, t = 5 h
   7. Ofen T = 60°C, t = 5 h

### 2. Rezeptur (Vergleichsbeispiel)

TPU mit dendritischen Silberpartikeln
Basismaterial: TPU (SEETHAN® 2403K; Festkörpergehalt 17 %)
Additiv: dendritische Silberpartikel (AMI DODUCO GN1 / AGPE0160-6)

| | |
|---|---|
| m_{PG} = 12,00 9 (mp = 2,04 g) | (20 m-%) |
| m_{A} = 8,16 g | (80 m-%) |

| | |
|---|---|
| Verarbeitung analog Pkt. 1. | |

### 3. Rezeptur:

TPU mit leitfähigen Pigmenten
Basismaterial: TPU (SEETHAN® 2403K; Festkörpergehalt 17 %)
Additiv: Minatec® 60 CM

| | |
|---|---|
| m_{PG} = 52,00 g (mp = 8,84 g) | (69 m-%) |
| m_{A} = 23,36 g | (31 m-%) |

| | |
|---|---|
| Verarbeitung analog Pkt. 1. | |

### 4. Rezeptur:

TPU mit leitfähigen Pigmenten
Basismaterial: TPU (SEETHAN® 2403K; Festkörpergehalt 17 %)
Additiv: Minatec® 60 CM

| | |
|---|---|
| m_{PG} = 52,00 g (mp = 8,84 g) | (62 m-%) |
| m_{A} = 31,87 g | (38 m-%) |

| | |
|---|---|
| Verarbeitung analog Pkt. 1. | |

### 5. Rezeptur

TPU mit leitfähigen Pigmenten
Basismaterial: TPU (SEETHAN® 2403K; Festkörpergehalt 17 %)
Additiv: Minatec® 40 CM

| | |
|---|---|
| m_{PG} = 52,00 g (mp = 8,84 g) | (62 m-%) |
| m_{A} = 31,87 g | (38 m-%) |

| | |
|---|---|
| Verarbeitung analog Pkt. 1. | |

### 6. Rezeptur

TPU mit leitfähigen Pigmenten
Basismaterial: TPU (SEETHAN® 2403K; Festkörpergehalt 17 %)
Additiv: Minatec® 31 CM

| | |
|---|---|
| m_{PG} = 52,00 g (mp = 8,84 g) | (62 m-%) |
| m_{A} = 31,87 g | (38 m-%) |

| | |
|---|---|
| Verarbeitung analog Pkt. 1. | |

### 7. Rezeptur

TPU mit leitfähigen Pigmenten
Basismaterial: TPU (SEETHAN® 2403K; Festkörpergehalt 17 %)
Additiv: Minatec® 51 CM

| | |
|---|---|
| m_{PG} = 52,00 g (mp = 8,84 g) | (62 m-%) |
| m_{A} = 31,87 g | (38 m-%) |

| | |
|---|---|
| Verarbeitung analog Pkt. 1. | |

### 8. Rezeptur

TPU mit leitfähigen Pigmenten
Basismaterial: TPU (SEETHAN® 2403K; Festkörpergehalt 17 %)
Additiv: Zelec® S

| | |
|---|---|
| m_{PG} = 52,00 g (mp = 8,84 g) | (62 m-%) |
| m_{A} = 31,87 g | (38 m-%) |

| | |
|---|---|
| Verarbeitung analog Pkt. 1. | |

### 9. Rezeptur

TPU mit leitfähigen Pigmenten
Basismaterial: TPU (SEETHAN® 2403K; Festkörpergehalt 17 %)
Additiv: Zelec® T

| | |
|---|---|
| m_{PG} = 52,00 g (m_{P} = 8,84 g) | (62 m-%) |
| m_{A} = 31,87 g | (38 m-%) |

| | |
|---|---|
| Verarbeitung analog Pkt. 1. | |

### 10. Rezeptur:

Silikon mit leitfähigen Pigmenten
Basismaterial: Silikon (Rhodia SILBIONE® RTV 4411)
Additiv: Minatec® 60 CM
   1. m_{PA} = 5,00 g
   2. m_{A} = 4,15 g (43 m-%)
   3. m_{L} = 3,20 g (HMDS)
   4. m_{PA} + m_{A} + m_{L} ; t = 5 min vermischen
   5. m_{PB} = 0,50 g (p_{PA} + m_{PB} → 57 m-%)
   6. m_{PA} + m_{A} + m_{L} + m_{PB} ; t = 3 min vermischen
   7. Probe evakuieren (Exsikkator): p = 200 mbar; t = 30 s
   8. Probe auftragen
   9. Lösungsmittel ausdiffundieren lassen, t = 5 h
   10. Ofen, T = 75°C, t = 12 h

### 11. Rezeptur:

TPU mit leitfähigen Pigmenten und intrinsisch leitfähigem Polymer
Basismaterial: Silikon (Rhodia SILBIONE® RTV 4411)
Additiv: Minatec® 60 CM, Clevios FE (Ormecon C 9000, Ormecon L 5000, Panipol W)

| | | |
|---|---|---|
| 1. | m_{PG} = 12,00 g (mp = 2,04 g) | (60 m-%) |
| 2. | m_{A} = 0,68 g | (Minatec® 20 m-%) |
| 3. | m_{IP} = 0,68 g | (Ormecon C 9000 20 m-%) |
| 4. | m_{PG} + m_{A} + m_{IP}; t = 2 min vermischen | |
| 5. | Probe evakuieren (Exsikkator): p = 400 mbar pulsierend; t = 30 s (durch pulsierendes ent- und belüften lassen sich feinste Bläschen evakuieren) | |
| 6. | Probe auftragen | |
| 7. | THF (Lsgm.) ausdiffundieren lassen, t = 5 h | |
| 8. | Ofen T = 60 °C, t = 5 h | |

### 12. Rezeptur

Silikon mit leitfähigen Pigmenten und intrinsisch leitfähigem Polymer
Basismaterial: Silikon (Rhodia SILBIONE® RTV 4411)
Additiv: Minatec® 60 CM, (Clevios FE, Ormecon C 9000, Ormecon L 5000, Panipol W)

| | |
|---|---|
| 1. | m_{PA} = 5,00 g |
| 2. | m_{A} = 4,15g (42 m-%) |
| 3. | m_{L} (HMDS) |
| 4. | m_{IP} = 0,40 g (4 m-% Panipol W) |
| 5. | m_{PA} + m_{A} + m_{L} + m_{IP} ; t = 5 min vermischen |
| 6. | m_{PB} = 0,50 g (m_{PA} + m_{PB} → 54 m-%) |
| 7. | m_{PA} + m_{A} + m_{L} + m_{IP} + m_{PB} ; t = 3 min vermischen |
| 8. | Probe evakuieren (Exsikkator): p = 200 mbar; t = 30 s |
| 9. | Probe auftragen |
| 10. | Lösungsmittel ausdiffundieren lassen, t = 5 h |
| 11. | Ofen, T = 75°C, t = 12 h |

### 13. Rezeptur (Vergleichsbeispiel)

Silikon mit sphärischen metallischen Additiven
Basismaterial: Silikon (Rhodia SILBIONE® RTV 4411)
Additiv: sphärische Silber-Kupfer Partikel (Foxmet S.A.)

| | |
|---|---|
| 1. | m_{PA} = 5,00 g |
| 2. | m_{A} = 63,25 g (92 m-%) |
| 3. | m_{PB} = 0,50 g (m_{PA} + m_{PB} → 8 m-%) |
| 4. | m_{PA} + m_{A} + m_{PB} ; t = 5 min vermischen |
| 5. | Probe evakuieren (Exsikkator): p = 200 mbar ; t = 30 s |
| 6. | Probe auftragen |
| 7. | Ofen, T = 75°C, t = 4 h |

### 14. Rezeptur

Acrylharz mit leitfähigen Pigmenten
Basismaterial: Orthocryl®
Additiv: Minatec® 60 CM

| | |
|---|---|
| 1. | m_{PA} = 40,14 g (58 m-%) |
| 2. | m_{A} = 27,66 g (40 m-%) |
| 3. | m_{L} (Verdünner) |
| 4. | m_{PB} = 1,38 g (2 m-% Härter) |

**ABBILDUNGEN**

| | |
|---|---|
| Abb. 1 | REM-Aufnahme eines Polymers mit kugelförmigen Metallpartikeln in 250-facher Vergrößerung; |
| Abb.2 | wie Abb. 1, in 3000-facher Vergrößerung; |
| Abb. 3 | REM-Aufnahme eines erfindungsgemäßen Leitfähigkeits-Additivs, gemischt aus plättchenförmigen und kugelförmigen Teilchen, 1000-fache Vergrößerung; |
| Abb. 4 | REM-Aufnahme eines erfindungsgemäßen Leitfähigkeits-Additivs in TPU, ausgerichtet; |
| Abb. 5 | wie Abb. 4, jedoch unausgerichtet/ungeordnet; |

### LEITFÄHIGKEITSTESTS

### 1. Zweileiterschaltung:

Der spezifische Durchgangswiderstand der Probekörper wird aus dem Durchgangswiderstand und der Dicke des Probekörpers bestimmt. Hierfür wird eine Zweileiterschaltung eingesetzt. Es erfolgt eine flächige Vorder- und Rückseitenkontaktierung eines dünnen folienartigen Probekörpers mit runder Fläche (r = 16 mm) mittels runder Messelektroden. Die Messung des Widerstandes wird mittels DMM VC 940 (VOLTCRAFT®, DE) durchgeführt. Die untere Kontaktelektrode wird durch ein vergoldetes Kontaktpad gebildet, die obere Gegenelektrode durch eine runde Titanelektrode.

### 2. Vierspitzenmessung

Die Vierspitzenmethode ist ein Standardmessverfahren aus der Halbleitertechnik. Der Probekörper wird mit vier äquidistant kolinear angeordneten Spitzen in einer Wenner-Anordnung kontaktiert. Über die äußeren Spitzen wird ein definierter konstanter Strom appliziert und über die inneren Spitzen wird der Potenzialabfall gemessen..

### TESTS ZU MECHANISCHEN EIGENSCHAFTEN - ZUGVERSUCHE

Mit Hilfe des Zugversuchs wird der Einfluss des Additivgehalts auf die mechanischen Eigenschaften des Basispolymers untersucht und bewertet. Der Zugversuch wird an einer Prüfmaschine "Zwick Z010" (Hersteller Roell) mit einem S2-Probekörper durchgeführt. Der Zugversuch ist ein Standardverfahren nach DIN EN ISO 527, um das Materialverhalten bei einachsiger, gleichförmiger, über den Querschnitt verteilter Zugbeanspruchung zu ermitteln. Aus dem Spannungs-Dehnungs-Diagramm (SDD) lassen sich die Kennwerte ermitteln. Für kautschukelastische Stoffe wird eine Typ III Dehnungskurve erwartet. Die Streckspannung ist das erste Maximum im SDD, die Zugfestigkeit ist die Zugspannung bei Maximalkraft und die Reißfestigkeit ist die Zugspannung im Augenblick des Reißens. Zum Vergleich der Polymerproben wird die Streckspannung gewählt. Alle Zugversuche werden ohne Vorbelastung der Probekörper durchgeführt, die ermittelten mechanischen Werte sind Erstdehnungswerte.

### TABELLEN

Die in den nachfolgenden Tabellen angegebenen Abkürzungen haben folgende Bedeutung:
m_{A}: Masse Additiv [kg]; m_{P}: Masse Polymer [kg]; m_{PG}: Masse Polymergemisch [kg]; m_{PA}: Masse der Polymerkomponente A [kg]; m_{PB}: Masse der Polymerkomponente B [kg]; c_{mA}: Massekonzentration des Additivs [%]; c_{mP}: Massekonzentration Polymer [%]; cv_{A}: Volumenkonzentration des Additivs [%]; c_{VP}: Volumenkonzentration des Polymers [%];

ρ_{D}: spezifischer elektrischer Durchgangswiderstand [Ωm]:
ps: spezifischer elektrischer Schichtwiderstand [Ωm];
ρ_{D}: spezifische elektrische Durchgangsleitfähigkeit [S/m];
σ_{S}: spezifische elektrische Schichtleitfähigkeit [S/m];
σ: mechanische Spannung [N/m²]

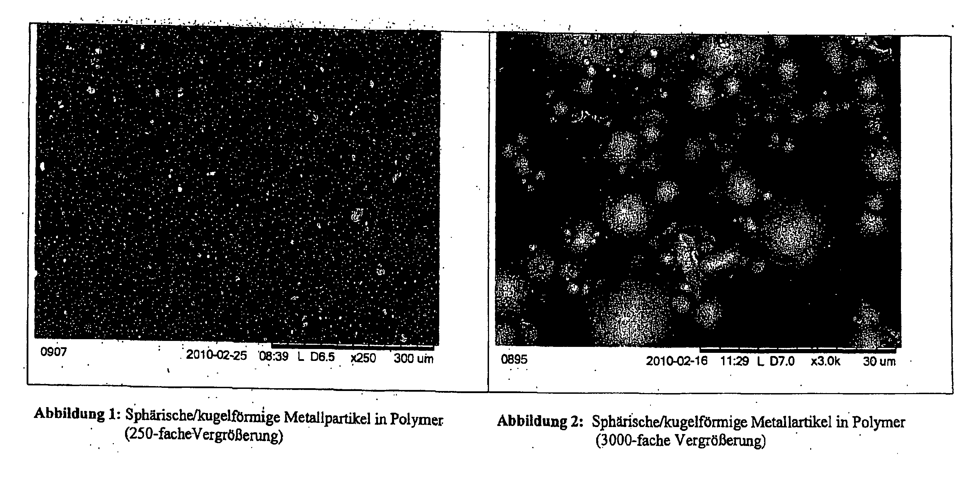

Wie die Abbildungen 1 und 2 in Verbindung mit Tabelle 7 zeigen, kann mit kugelförmigen Leitfähigkeitsadditiven kein leitfähiges Elastomer im Sinne dieser Erfindung erhalten werden, da die Teilchen auch bei hoher Konzentration noch einzeln durch Polymer umgeben und hierdurch isoliert sind.

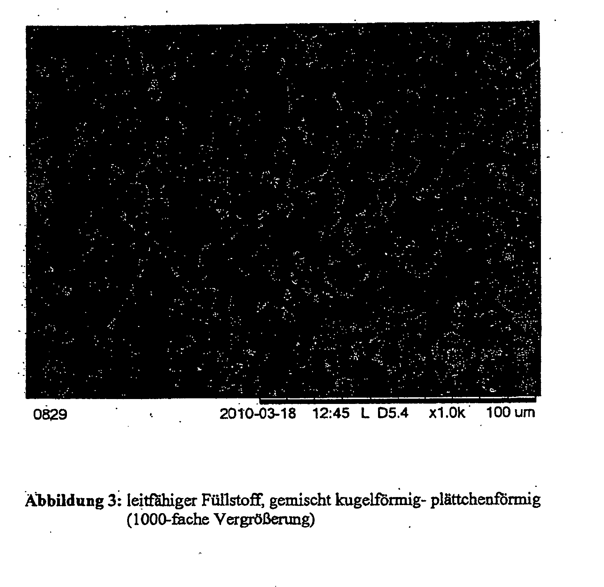

Die Situation ist anders bei plättchenförmigen Teilchen, wie sie in Abbildung 3 (im Gemisch mit kugelförmigen Teilchen) dargestellt sind. Mit diesen Teilchen wird die Perkolationsschwelle deutlich früher überschritten, so dass weniger Leitfähigkeits-Additiv erforderlich ist, um eine bestimmte gewünschte Leitfähigkeit zu erzielen. Die mechanischen Eigenschaften des Basispolymers werden dabei durch den geringeren Gehalt an leitfähigen Teilchen weniger gestört.

Plättchenförmige bzw. langgestreckte Teilchen halten auch unter mechanischer Belastung eines körpers aus dem leitfähigen Polymer - beispielsweise bei Biegebewegungen, Dehnungen oder Torsionen - besser den Kontakt, so dass eine Leitfähigkeit erhalten bleibt.

Der Erhalt der Eigenschaften wird durch die Daten in den Tabellen bestätigt.

Der Maßstab am rechten unteren Rand der Abbildungen 1 bis 3 beträgt:
Bei Abb. 1: 300 µm, bei Abb. 2: 30µm, bei Abb. 3 100 µm.

### AUSRICHTUNG PLÄTTCHENFÖRMIGER TEILCHEN

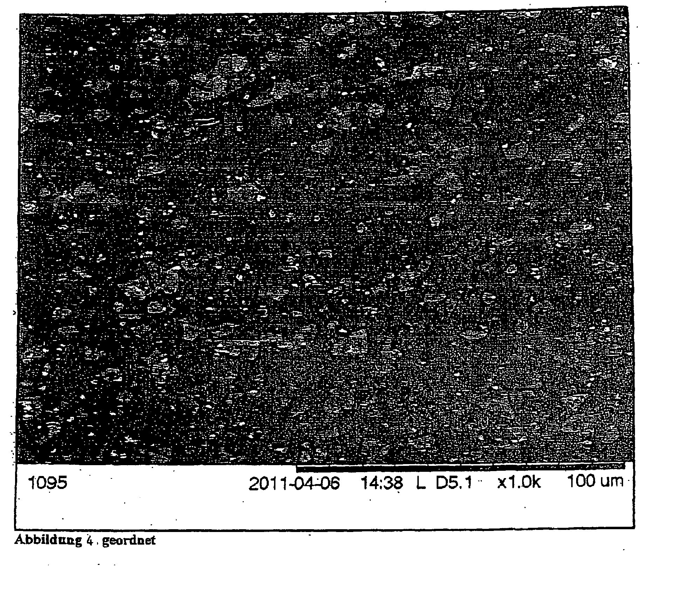

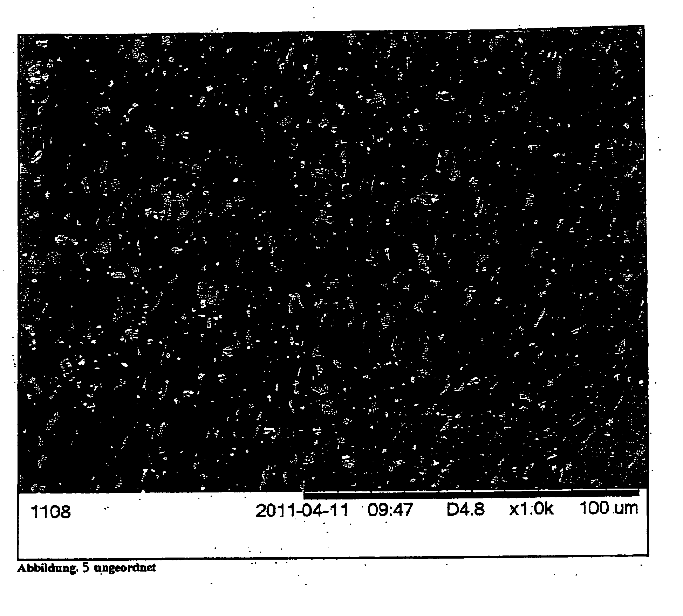

Abbildungen 4 und 5 zeigen den Effekt der Ausrichtung plättchenförmiger Teilchen. Abbildung 4 zeigt die rasterelektronenmikroskopische Aufnahme einer Querschnittsansicht durch ein Probestück aus TPU mit plättchenförmigen leitfähigen Teilchen, die beim Erzeugen der Schicht durch Rakeln ausgerichtet wurden. Es ergibt sich ein Zustand erhöhter Ordnung gegenüber dem nicht ausgerichteten bzw. ungeordneten, ansonsten völlig entsprechenden Material, wie es in Abbildung 5 gezeigt ist (der Maßstab am rechten unteren Bildrand beträgt bei Abbn. 4 und 5 jeweils 100 µm). Wie aus Abbildung 4 zu erkennen, ordnen sich die Plättchen teilweise und reihen sich zu kettenartigen Gebilden aneinander. Die Perkolation wird erhöht. Geordneter und ungeordneter bzw. ausgerichteter und nicht ausgerichteter Zustand sind visuell unterscheidbar.

### TPU mit Ag - Partikeln dendritischer Form

a → Silber Pulver GN1
b → Silber Pulver AGPE0160-6

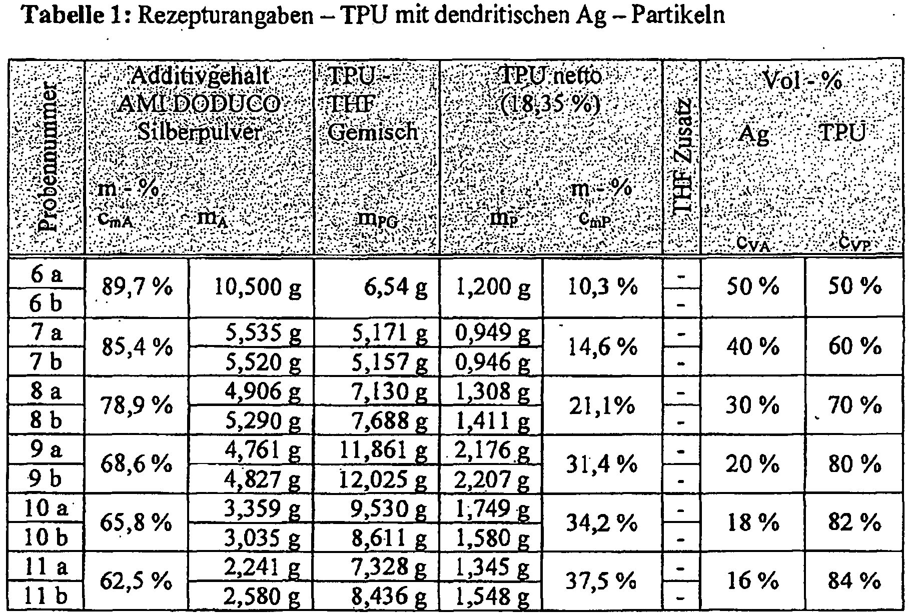

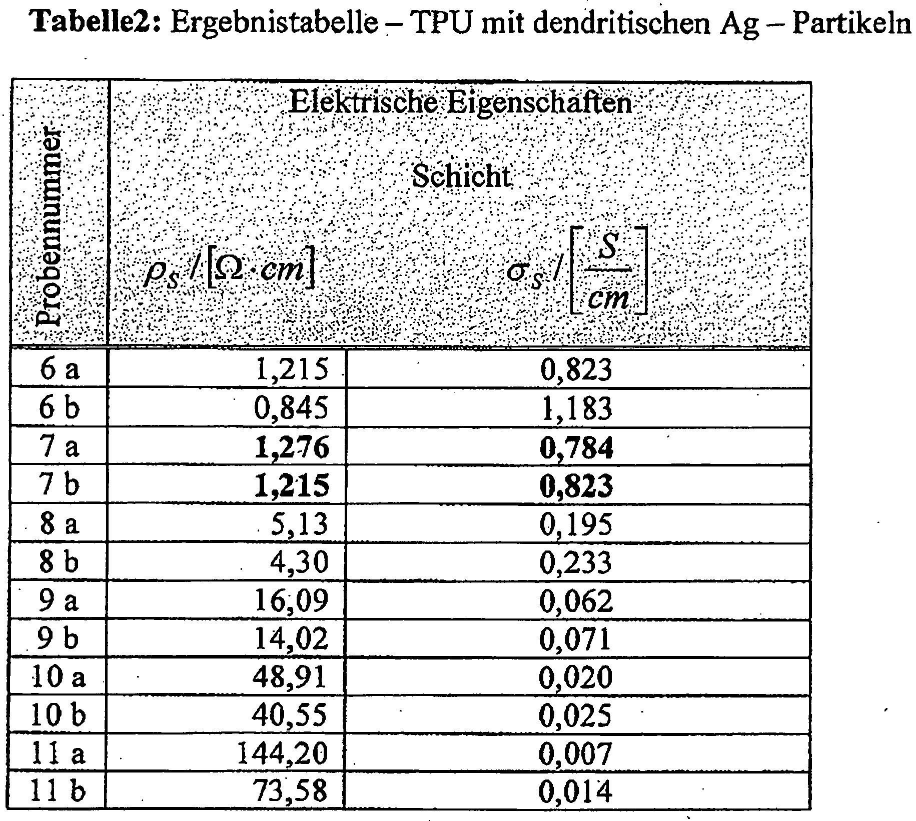

### Silikon Rhodia SILBIONE^{®} RTV4411 mit Minatec^{®} 60 CM

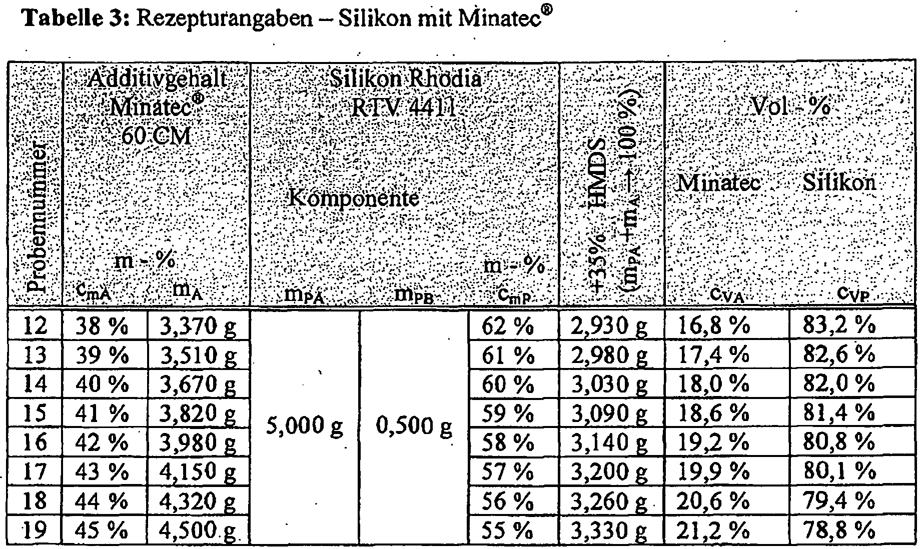

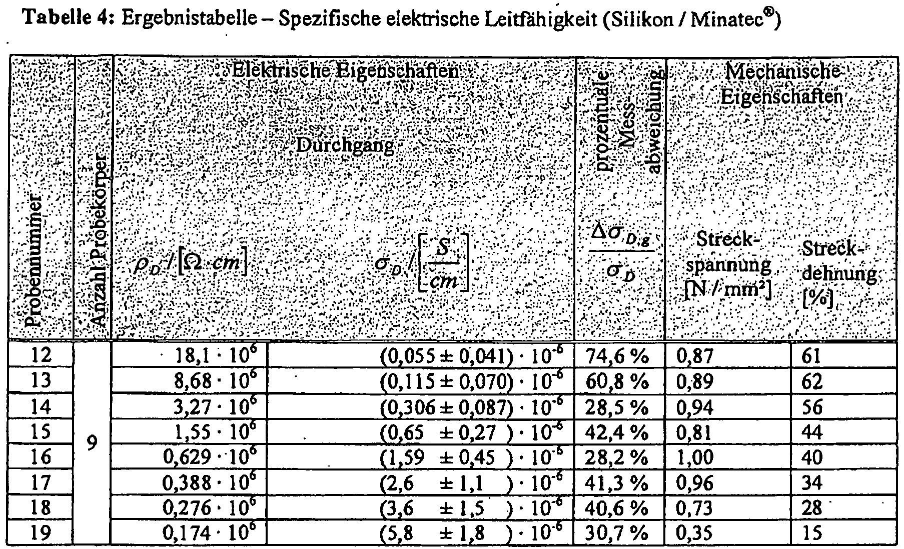

### TPU SEETHAN^{®} 2403 K mit Minatec^{®} 60 CM

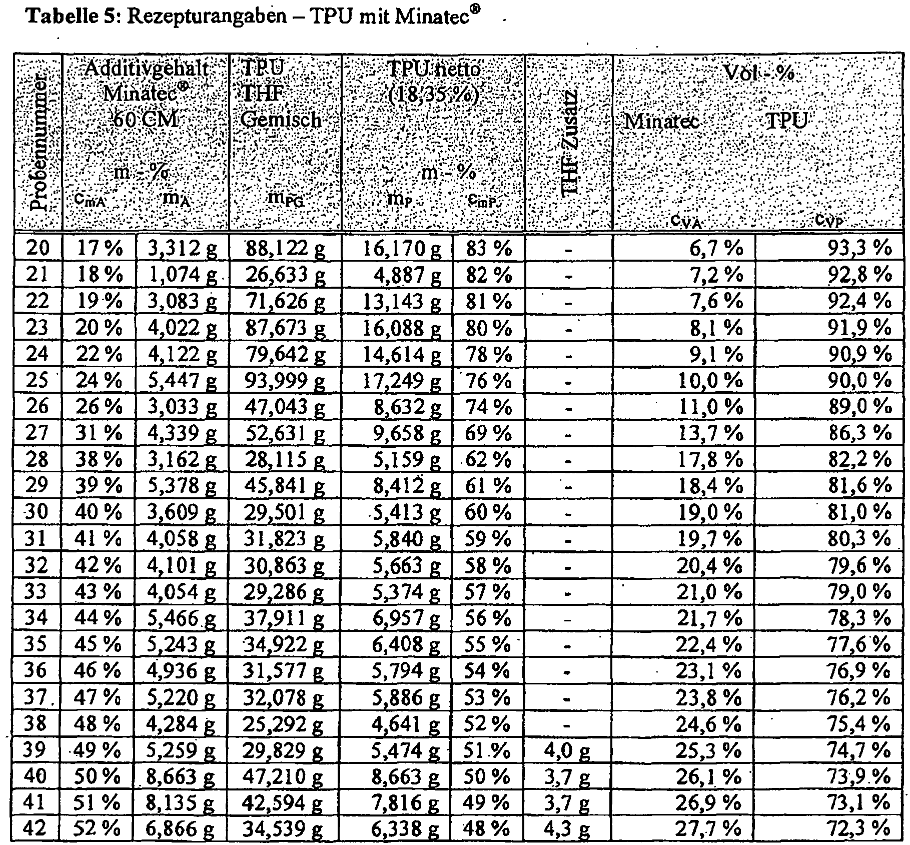

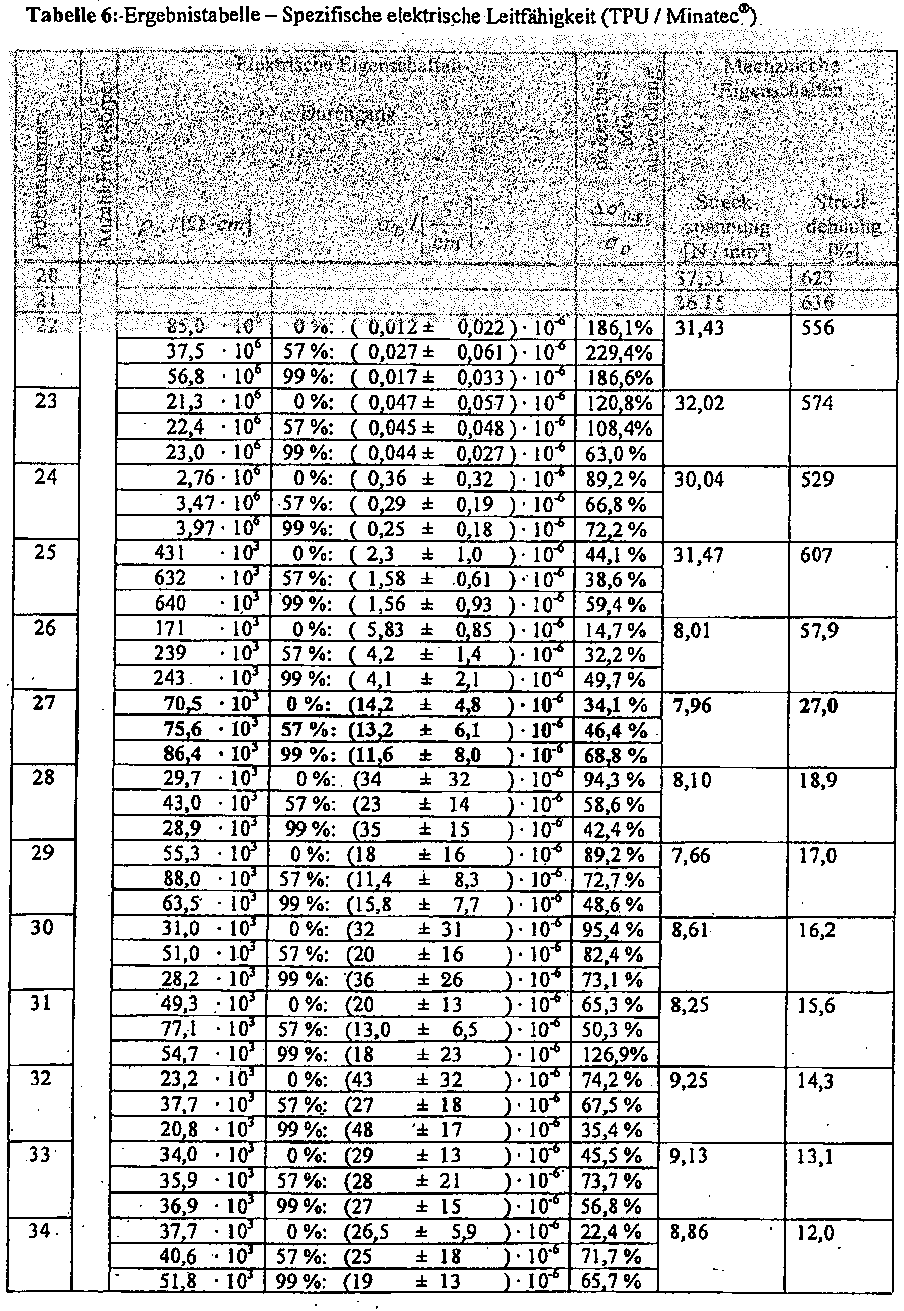

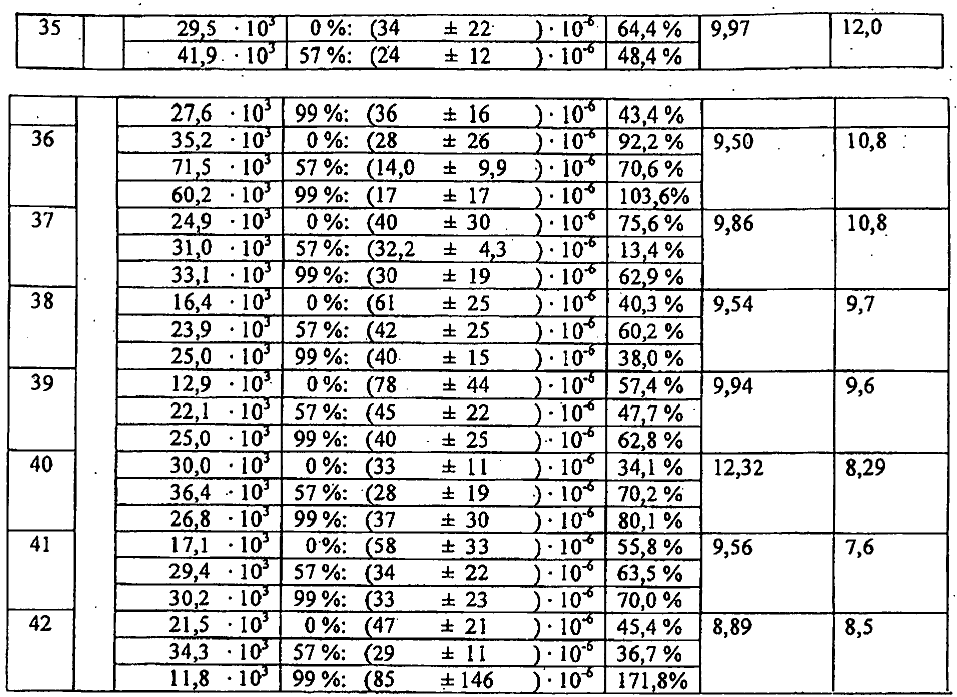

### Referenz: Sphärische Silber - Kupfer Partikel in Silikon

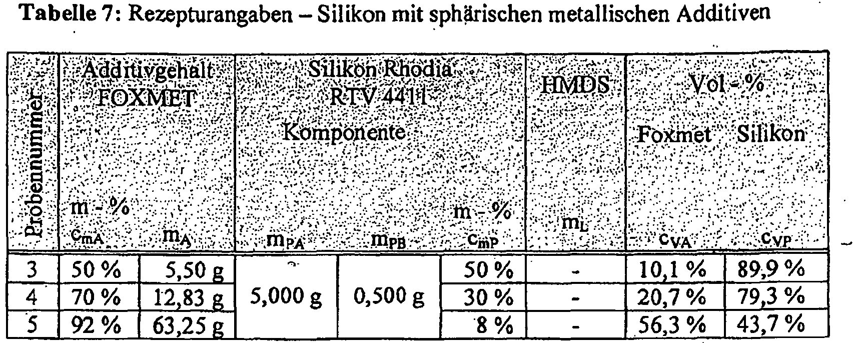

### Keine elektrische Leitfähigkeit!

### Referenz: Wacker Elastosil^{®}

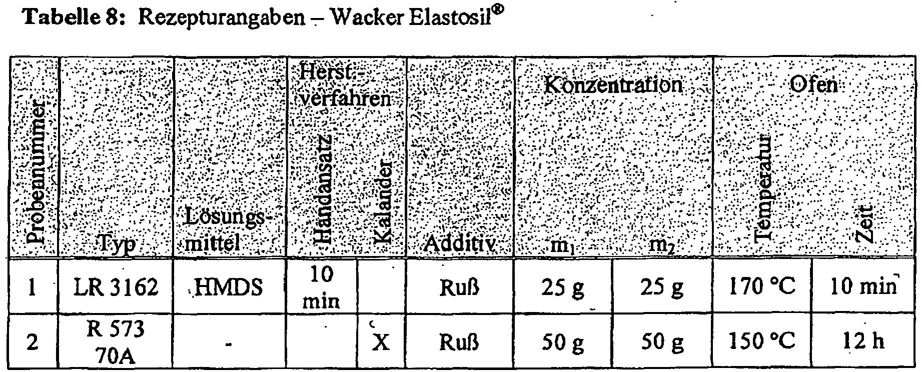

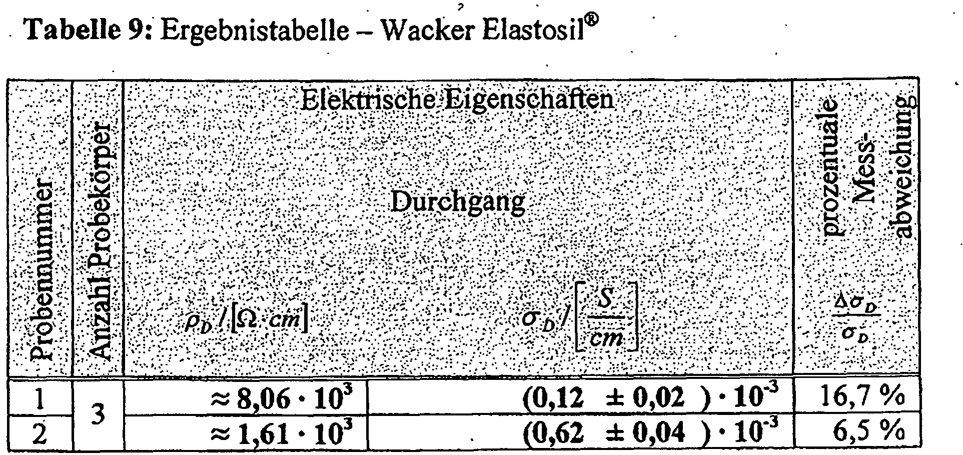

## Patentansprüche

1. Hautauflage für auf der Haut eines Benutzers anzuordnende Elektroden, Sensoren, Messfühler, flexible Leiterbahnen, mit der Haut eines Benutzers in Kontakt stehende medizinische Geräte, elastische Bandagen, Liner, Sleeves, Orthesen und deren Teile sowie Prothesen und deren Teile, enthaltend ein leitfähiges Polymermaterial aus einem Basispolymer und darin eingebetteten und über sein Volumen verteilten leitfähigen Feststoffpartikeln, ausgenommen Rußteilchen, wobei das Basispolymer ein Elastomer oder ein thermoplastisches Elastomer ist, **dadurch gekennzeichnet, dass** als leitfähige Feststoffpartikel plättchenförmige, leitfähige Teilchen, nämlich leitfähig beschichtete Plättchengrundkörper aus einem anorganischoxidischen Trägermaterial, mit einem Füllgehalt bis 35 Vol% in dem Basispolymer enthalten sind, durch die eine Leitfähigkeit des Polymermaterials mit einem spezifischen Durchgangs-Widerstand von nicht mehr als 1000 kΩ·cm bewirkt wird, gemessen mit dem in der Beschreibung angegebenen Leitfähigkeitstest "Zweileiterschaltung", und dass das Basispolymer eine gemäß DIN 53504 gemessene, reversible Längendehnfähigkeit besitzt, bei der bis zu einer Dehnung von wenigstens 25 % die Leitfähigkeit des Polymermaterials erhalten bleibt.

2. Hautauflage nach Anspruch 1, **dadurch gekennzeichnet, dass** das Basispolymer ein Silikon, elastisches Polyurethan, TPU, Silikongel, Polyurethangel, Latex, Gummi oder Synthesekautschuk ist.

3. Hautauflage nach Anspruch 1 oder 2, **dadurch gekennzeichnet, dass** das Basispolymer zusätzlich als weitere leitfähige Feststoffpartikel kugelförmige, leitfähige Teilchen enthält.

4. Hautauflage nach Anspruch 3, **dadurch gekennzeichnet, dass** der Durchmesser der kugelförmigen leitfähigen Teilchen zwischen 500 nm und 25 µm beträgt, dass die Länge der Teilchen zwischen 1 µm und 60 µm beträgt und dass das Verhältnis der Hauptachse zu wenigstens einer der orthogonalen Nebenachsen der Teilchen zwischen 1,5:1 und 10:1 liegt.

5. Hautauflage nach Anspruch 3 oder 4, **dadurch gekennzeichnet, dass** das Gewichtsverhältnis der kugelförmigen leitfähigen Teilchen zu den plättchenförmigen, dendritischen oder länglichen leitfähigen Teilchen von 10:90 bis 90:10, insbesondere von 10:90 bis 60:40 beträgt.

6. Hautauflage nach einem der Ansprüche 1 bis 5, **dadurch gekennzeichnet, dass** die Teilchen teilweise ausgerichtet und dabei teilweise zu Ketten aneinander gereiht sind.

7. Hautauflage nach einem der Ansprüche 1 bis 6, **dadurch gekennzeichnet, dass** ein intrinsisch leitfähiges Polymer in einem Anteil bis zu 30 Gew.-% enthalten ist.

8. Hautauflage nach einem der Ansprüche 1 bis 7, **dadurch gekennzeichnet, dass** es ausgeformt als Folie oder Formkörper, insbesondere als Pad oder Kissen vorliegt.

9. Verwendung der Hautauflage nach einem der Ansprüche 1 bis 8 als Elektrode zur Signalerfassung, Signalgebung oder Stimulation.

10. Verwendung der Hautauflage nach einem der Ansprüche 1 bis 8 als Sensor, insbesondere als Feuchtigkeitssensor oder Reizübertragungssensor.

11. Verfahren zur Herstellung eines leitfähigen Polymermaterials für die Haut auflage nach einem der Ansprüche 1 bis 8, welches leitfähige Feststoffpartikel über sein Volumen verteilt und dispergiert enthält, **dadurch gekennzeichnet, dass** das Basispolymer während seiner Herstellung oder im aufgeschmolzenen oder gelösten Zustand mit den leitfähigen Teilchen versetzt wird und dass durch Fließenlassen der Polymermasse, durch Rakeln, durch Extrudieren oder sonstiges Pressen durch eine Düse oder durch Ziehen von Folien eine Ausrichtung der leitfähigen Teilchen in der noch nicht ausreagierten Polymermasse oder der gelösten oder geschmolzenen Polymermasse erfolgt und bei Erstarren des Polymers fixiert wird.

## Claims

1. Skin overlay for electrodes, sensors, measuring feelers, flexible conductor paths that are to be arranged on the skin of a user, medical devices, elastic bandages, liners, sleeves, ortheses and the parts thereof and prostheses and the parts thereof that are in contact with the skin of a user, containing a conductive polymer material made of a base polymer and conductive solid particles embedded therein and distributed over its volume, with the exception of carbon black particles
wherein the base polymer is an elastomer or a thermoplastic elastomer, **characterized in that** plateshaped, conductive particles, viz. conductively coated plate main bodies formed from an inorganic-oxidic carrier material, are contained with a filling content up to 35 vol-% in the base polymer as conductive solid particles, which bring about a conductivity of the polymer material with a volume resistivity of not more than 1000 kΩ.cm, measured using the "Two-wire circuit" conductivity test specified in the description, and **in that** the base polymer has a reversible longitudinal resiliency which is measured in accordance with DIN 53504 and in which the conductivity of the polymer material is maintained up to an elongation of at least 25%.

2. Skin overlay according to Claim 1, **characterized in that** the base polymer is a silicone, elastic polyurethane, TPU, silicone gel, polyurethane gel, latex, rubber, or synthetic rubber.

3. Skin overlay according to Claim 1 or 2, **characterized in that** the base polymer additionally contains spherical conductive particles as further conductive solid particles.

4. Skin overlay according to Claim 3, **characterized in that** the diameter of the spherical conductive particles is between 500 nm and 25 µm, **in that** the length of the particles is between 1 µm and 60 µm, and **in that** the ratio of the main axis to at least one of the orthogonal secondary axes of the particles is between 1.5:1 and 10:1.

5. Skin overlay according to Claim 3 or 4, **characterized in that** the weight ratio of the spherical conductive particles to the plate-shaped, dendritic, or oblong conductive particles is 10:90 to 90:10, in particular 10:90 to 60:40.

6. Skin overlay according to any one of Claims 1 to 5, **characterized in that** the particles are partially aligned and partially concatenated to form chains.

7. Skin overlay according to any one of Claims 1 to 6, **characterized in that** an intrinsically conductive polymer is contained in a fraction of up to 30 wt.-%.

8. Skin overlay according to any one of Claims 1 to 7, **characterized in that** it is provided molded as a film or molded body, in particular as a pad or cushion.

9. Use of the skin overlay according to any one of Claims 1 to 8 as an electrode for signal acquisition, signal generation, or stimulation.

10. Use of the skin overlay according to any one of Claims 1 to 8 as a sensor, in particular as a moisture sensor or stimulus transmission sensor.

11. Method for producing a conductive polymer material for the skin overlay according to any one of Claims 1 to 8, which contains conductive solid particles distributed and dispersed over its volume, **characterized in that** the base polymer is admixed during its production or in the molten or dissolved state with the conductive particles, and **in that** an alignment of the conductive particles is performed in the not yet reacted polymer compound or the dissolved or molten polymer compound by permitting the polymer compound to flow, by scraping, by extrusion or other pressing through a die, or by drawing of films and is fixed upon solidification of the polymer.

## Revendications

1. Structure en contact avec la peau, pour des électrodes, capteurs, sondes de mesure, cartes à circuits imprimés flexibles, à placer sur la peau d'un utilisateur, des appareils médicaux à mettre en contact avec la peau d'un utilisateur, des bandages élastiques, des gaines, des manchons, des orthèses et leurs parties ainsi que des prothèses et leurs parties, contenant un matériau polymère conducteur constitué d'un polymère de base et de particules solides conductrices, à l'exclusion de particules de noir de carbone, incluses dans celui-ci et réparties sur son volume, le polymère de base étant un élastomère ou un élastomère thermoplastique, **caractérisée en ce qu'**en tant que particules solides conductrices des particules conductrices en forme de plaquettes, à savoir des corps de base en plaquettes munis d'un revêtement conducteur, à base d'un matériau de support de type oxyde inorganique, sont contenues dans le polymère de base à une concentration de remplissage de jusqu'à 35 % en volume, au moyen desquelles est réalisée une conductivité du matériau polymère avec une résistance transversale spécifique n'excédant pas 1 000 kΩ·cm, mesurée avec le test de conductivité « montage deux fils » indiqué dans la description, et **en ce que** le polymère de base présente une aptitude à l'extension longitudinale réversible, mesurée selon DIN 53504, avec laquelle la conductivité du matériau polymère est conservée jusqu'à une extension d'au moins 25 %.

2. Structure en contact avec la peau selon la revendication 1, **caractérisée en ce que** le polymère de base est un silicone, un polyuréthane élastique, un TPU, un gel se silicone, un gel de polyuréthane, un latex, une gomme ou un caoutchouc synthétique.

3. Structure en contact avec la peau selon la revendication 1 ou 2, **caractérisée en ce que** le polymère de base contient en outre comme autres particules solides conductrices des particules conductrices sphériques.

4. Structure en contact avec la peau selon la revendication 3, **caractérisée en ce que** le diamètre des particules conductrices sphériques est compris entre 500 nm et 25 µm, **en ce que** la longueur des particules est comprise entre 1 µm et 60 µm et **en ce que** le rapport de l'axe principal à au moins l'un des axes secondaires orthogonaux des particules est compris entre 1,5:1 et 10:1.

5. Structure en contact avec la peau selon la revendication 3 ou 4, **caractérisée en ce que** le rapport pondéral des particules conductrices sphériques aux particules conductrices en forme de plaquettes, dendritiques ou allongées vaut de 10:90 à 90:10, en particulier de 10:90 à 60:40.

6. Structure en contact avec la peau selon l'une quelconque des revendications 1 à 5, **caractérisée en ce que** les particules sont en partie orientées et en cela en partie alignées les unes avec les autres en chaînes.

7. Structure en contact avec la peau selon l'une quelconque des revendications 1 à 6, **caractérisée en ce qu'**un polymère intrinsèquement conducteur est contenu en une proportion de jusqu'à 30 % en poids.

8. Structure en contact avec la peau selon l'une quelconque des revendications 1 à 7, **caractérisée en ce qu'**elle est mise en forme de film ou de corps moulé, en particulier de coussinet ou de coussin.

9. Utilisation de la structure en contact avec la peau selon l'une quelconque des revendications 1 à 8, en tant qu'électrode destinée à l'acquisition de signaux, l'émission de signaux ou la stimulation.

10. Utilisation de la structure en contact avec la peau selon l'une quelconque des revendications 1 à 8, en tant que capteur, en particulier en tant que capteur d'humidité ou capteur de transmission de stimuli.

11. Procédé pour la production d'un matériau polymère conducteur pour la structure en contact avec la peau selon l'une quelconque des revendications 1 à 8, qui contient des particules solides conductrices dispersées et réparties sur son volume, **caractérisé en ce qu'**on mélange le polymère de base, pendant sa préparation ou à l'état fondu ou dissous, avec les particules conductrices et **en ce qu'**une orientation des particules conductrices dans la masse de polymère n'ayant pas encore complètement réagi ou la masse de polymère fondue ou dissoute s'effectue par écoulement de la masse polymère, par raclage, par extrusion ou autre pressage à travers une buse ou par tirage de films et est fixée lors du durcissement du polymère.
